# EUROPÄISCHE PATENTSCHRIFT

(11) **EP 2 951 453 B1**
(45) Veröffentlichungstag und Bekanntmachung des Hinweises auf die Patenterteilung: **28.12.2016**
(21) Anmeldenummer: 14700413.9
(22) Anmeldetag: 14.01.2014
(51) Int. Cl.: F16D 3/76

(54) **ELASTISCHE KUPPLUNG**
ELASTIC COUPLING
ACCOUPLEMENT ÉLASTIQUE

(30) Priorität: 01.02.2013 DE 102013101069
(43) Veröffentlichungstag der Anmeldung: 09.12.2015
(73) Patentinhaber: Ringfeder Power Transmission Tschan GmbH, 66538 Neunkirchen (DE)
(72) Erfinder: GRAF, Simon, 66299 Friedrichsthal (DE); LAMBER, Günter, 66538 Neunkirchen (DE)
(74) Vertreter: Cohausz & Florack
(86) Internationale Anmeldenummer: PCT/EP2014/050613
(87) Internationale Veröffentlichungsnummer: WO 2014/117997

(56) Entgegenhaltungen:
- EP-A2- 1 488 122
- DE-B- 1 080 358
- US-A- 5 630 758
- US-A1- 2004 198 499

## Beschreibung

Die Erfindung betrifft eine elastische Kupplung, insbesondere elastische Wellenkupplung, mit einem metallischen Außenteil, einem metallischen Innenteil und elastischen Puffern, die zwischen dem Außenteil und dem Innenteil, beabstandet voneinander angeordnet sind, wobei das Außenteil radial nach innen vorstehende, Pufferkontaktflächen definierende Erhebungen aufweist, und wobei das Innenteil radial nach außen vorstehende, Pufferkontaktflächen definierende Erhebungen aufweist.

Derartige Kupplungen sind aus der Praxis bekannt, zum Beispiel unter der Marke ROLLASTIC. Die bekannte Kupplung kann einen Axial-, einen Radial- und auch einen Winkelversatz der zu kuppelnden Wellen ausgleichen. Beim Übertragen des Drehmomentes werden alle elastischen Puffer beansprucht. Die Kupplung ermöglicht eine einfache Trennung des Antriebes von der zugeordneten Arbeitsmaschine, ohne dass hierzu die Antriebswelle und die Abtriebswelle axial auseinander gerückt werden müssen. Es müssen lediglich ein Sicherungsring von einer zugeordneten Ringnut der Wellennabe gelöst, der Sicherungsring und eine durch ihn festlegbare ringförmige Ausrichtscheibe axial verschoben, und die Puffer aus ihren durch das Außenteil und das Innenteil definierten Aufnahmen herausgestoßen werden.

Die bekannte Kupplung der Bauart ROLLASTIC ist für eine Vielzahl von Einsatzfällen geeignet, insbesondere für den Antrieb von Förderern, Brechern, Mühlen, Rollgängen, Mischern, Rührwerken, Hochdruckpumpen und Kompressoren. Diese Kupplung hat sich in vielen Einsatzfällen sehr bewährt. Gleichwohl ist eine solche Kupplung hinsichtlich eines Einsatzes bei hohen Drehschwingungen sowie größeren zu beschleunigenden Massen und heftigen Stößen noch verbesserungsfähig, um die angeschlossenen Aggregate vor übermäßigen Drehschwingungen bzw. kritischen dynamischen Belastungen zu schützen.

Die EP 1488 122 A2 offenbart eine elastische Wellenkupplung, mit einem metallischen Außenteil, einem metallischen Innenteil und elastischen Puffern, die zwischen dem Außenteil und dem Innenteil, beabstandet voneinander angeordnet sind, wobei das Außenteil radial nach innen vorstehende, Pufferkontaktflächen definierende Erhebungen aufweist und das Innenteil radial nach außen vorstehende, Pufferkontaktflächen definierende Erhebungen aufweist, und wobei die elastischen Puffer in mindestens zwei radial voneinander beabstandeten Gruppen angeordnet sind.

Die US 2004/198499 A1 betrifft ein Entkopplungselement aus verformbarem Material in einem Getriebe, welches eine zentrale Rotationsachse besitzt, wobei das Entkopplungselement aus einem ringförmigen Zwischenteil besteht und elastische Puffer aufweist. Dieses Dokument offenbart zwar auch eine elastische Wellenkupplung, jedoch sind die elastischen Puffer Teil des ringförmigen Zwischenteils. Ferner weist das Zwischenteil keine Pufferkontaktflächen definierende Erhebungen auf.

Die DE 1080 358 B offenbart eine elastische Wellenkupplung mit zwei mit Verzahnungen versehenen, an den zu verbindenden Wellenstümpfen befestigten, starren Mitnahmeteilen und einem ringförmigen Übertragungsteil, wobei das eine Mitnahmeteil als wellenförmig verzahnter Rohrstutzen ausgebildet ist.

Davon ausgehend lag der vorliegenden Erfindung die Aufgabe zugrunde, eine drehelastische Kupplung zu schaffen, die gegenüber herkömmlichen Kupplungen der eingangs genannten Art einen sanfteren Anlauf sowie ein drehschwingungsoptimiertes Laufverhalten ermöglicht.

Zur Lösung dieser Aufgabe wird eine Kupplung mit den Merkmalen des Anspruchs 1 vorgeschlagen. Bevorzugte und vorteilhafte Ausgestaltungen der erfindungsgemäßen Kupplung sind in den Unteransprüchen angegeben.

Die erfindungsgemäße Kupplung ist dadurch gekennzeichnet, dass die elastischen Puffer in mindestens zwei radial voneinander beabstandeten Gruppen (Reihen) angeordnet sind, wobei zwischen den benachbarten Puffergruppen (Reihen) mindestens ein ringförmiges Zwischenteil angeordnet ist, das über die elastischen Puffer sowohl mit dem Außenteil als auch mit dem Innenteil drehelastisch verbunden ist. Die elastischen Puffer und das ringförmige Zwischenteil sind erfindungsgemäß separat voneinander hergestellte Komponenten, die in der erfindungsgemäßen Kupplung nicht stoffschlüssig, sondern formschlüssig miteinander verbunden sind.

Durch die Anordnung der elastischen Puffer in mindestens zwei radial voneinander beabstandeten Gruppen (Reihen), d.h. entlang mindestens zweier radial beabstandeter, im Wesentlichen koaxialer Ringe, vorzugsweise Kreise, kann die Drehsteifigkeit der Kupplung in einem relativ weiten Bereich frei eingestellt und damit den Erfordernissen des jeweiligen Einsatzfalls variabel angepasst werden.

Erfindungsgemäß weist das zwischen zwei benachbarten Gruppen von elastischen Puffern angeordnete ringförmige Zwischenteil radial nach innen vorstehende Erhebungen sowie radial nach außen vorstehende Erhebungen auf, wobei die jeweiligen nach innen bzw. außen vorstehenden Erhebungen Pufferkontaktflächen oder Formschlussflächen definieren. Dies ist hinsichtlich eines Wechsels einer Gruppe von Puffern durch härtere oder weichere Puffer, ohne dass in diesem Fall die Puffer der anderen Gruppe(n) gewechselt werden müssen, von Vorteil.

Insbesondere bietet die erfindungsgemäße Kupplung die Möglichkeit, ihre Drehsteifigkeit durch eine Anordnung von elastischen Puffern unterschiedlicher Shore-Härte, Größe und/oder Form auf den radial beabstandeten Ringbereichen an die jeweiligen Einsatzbedingungen anzupassen. Eine bevorzugte Ausgestaltung der erfindungsgemäßen Kupplung sieht dementsprechend vor, dass sich die Gruppen der elastischen Puffer voneinander hinsichtlich des Materials, der Größe und/oder der Form der elastischen Puffer unterscheiden. Insbesondere können sich die elastischen Puffer der einen Gruppe von den elastischen Puffern (einer) der anderen Gruppe(n) auch hinsichtlich ihrer Länge voneinander unterscheiden.

Im Vergleich zu einer herkömmlichen gattungsgemäßen Kupplung, beispielsweise der bekannten Kupplung der Bauart ROLLASTIC, bietet die erfindungsgemäße Kupplung einen erheblich größeren Einstellbereich, um die Drehsteifigkeit der Kupplung zu verändern bzw. ein an Drehschwingungen armes Laufverhalten zu erzielen.

Die elastischen Puffer sind beispielsweise im Wesentlichen aus synthetischem und/oder natürlichem Elastomer und/oder aus nicht thermoplastischem Polyurethan hergestellt. Ihre Härte liegt beispielsweise im Bereich von 50 bis 98 Shore-A, bevorzugt im Bereich von 55 bis 95 Shore-A. Sie können leitfähiges Material (Antistatika), beispielsweise Kohlenstoff- und/oder Metallpartikel enthalten, um elektrostatische Aufladungen des Puffermaterials sowie der Umgebung des Puffermaterials zu verhindern. Alternativ können die elastischen Puffer aber auch elektrisch isolierend ausgeführt sein.

Die elastischen Puffer zumindest einer der Puffergruppen sind vorzugsweise im Wesentlichen rotationssymmetrisch, beispielsweise zylindrisch, tonnenförmig oder kugelförmig ausgebildet.

Die erfindungsgemäße Kupplung kann zwei, aber auch mehr als zwei radial beabstandete Puffergruppen aufweisen.

Eine weitere bevorzugte Ausgestaltung der erfindungsgemäßen Kupplung ist dadurch gekennzeichnet, dass die elastischen Puffer einer inneren Gruppe oder der inneren Gruppe härter sind und/oder einen kleineren Durchmesser aufweisen als die elastischen Puffer einer äußeren Gruppe oder der äußeren Gruppe. Hierdurch lassen sich ein besonders sanfter Anlauf sowie ein besonders drehschwingungsarmes Laufverhalten der mit der Kupplung gekoppelten Aggregate erzielen. Dabei sollten das Innenteil der Kupplung vorzugsweise mit der anzutreibenden Arbeitsmaschine und das Außenteil mit der treibenden Kraftmaschine verbunden sein. Die elastischen Puffer einer inneren Gruppe oder der inneren Gruppe müssen jedoch nicht zwingend härter sein als die elastischen Puffer einer äußeren Gruppe oder der äußeren Gruppe; sie können auch im Wesentlichen gleich hart oder weicher sein als letztere.

Das ringförmige Zwischenteil der erfindungsgemäßen Kupplung kann auch als sternförmiges Zwischenteil bezeichnet werden.

Das ringförmige Zwischenteil ist vorzugsweise aus Kunststoff oder Leichtmetall, beispielsweise aus Aluminium oder einer Aluminiumlegierung hergestellt. Hierdurch kann das Gewicht der erfindungsgemäßen Kupplung reduziert oder zumindest auf ein vorgegebenes Gesamtgewicht begrenzt werden. Des Weiteren lässt sich das ringförmige Zwischenteil in diesem Fall einfacher herstellen, da sich ein Werkstück (Ausgangswerkstück) aus Kunststoff oder Leichtmetall einfacher spanabhebend bearbeiten lässt als beispielsweise ein Werkstück aus Stahl. Allerdings kann das mindestens eine ringförmige Zwischenteil der erfindungsgemäßen Kupplung auch aus einem anderen Metall als Leichtmetall, insbesondere aus Stahl hergestellt werden.

Eine weitere vorteilhafte Ausgestaltung der erfindungsgemäßen Kupplung sieht vor, dass das ringförmige Zwischenteil aus mindestens zwei axial trennbaren Teilen aufgebaut ist. Diese Ausgestaltung erleichtert die Montage der elastischen Puffer. Die mindestens zwei axial trennbaren Teilen sind optional mit Verbindungsmitteln versehen, so dass sie lösbar miteinander verbunden werden können. Die lösbaren Verbindungsmittel können dabei beispielsweise als Schraubverbindung oder lösbare Rastverbindung ausgeführt sein.

Ferner ist es hinsichtlich einer möglichst gleichmäßigen Schwingungsdämpfung bei kompakter Bauweise der Kupplung günstig, wenn gemäß einer weiteren bevorzugten Ausgestaltung der Erfindung die Gruppen oder mindestens zwei der Gruppen gleich viele elastische Puffer aufweisen.

Eine weitere vorteilhafte Ausgestaltung der erfindungsgemäßen Kupplung ist dadurch gekennzeichnet, dass die elastischen Puffer einer der Gruppen relativ zu den elastischen Puffern der dazu benachbarten, radial beabstandeten Gruppe in Umfangsrichtung versetzt angeordnet sind. Diese Ausgestaltung ermöglicht eine besonders kompakte Bauweise der erfindungsgemäßen Kupplung.

Noch eine weitere Ausgestaltung der erfindungsgemäßen Kupplung besteht darin, dass diese mit einem Schwingungstilger versehen ist. Der Schwingungstilger ist dabei vorzugsweise so ausgebildet, dass seine Federsteifigkeit bzw. Torsionsfedersteifigkeit auf eine zu dämpfende bzw. zu tilgende Frequenz einstellbar ist.

Vorzugsweise weist der Schwingungstilger gummielastische Elemente als Federn und einen ringförmigen Körper als Masse auf, wobei die gummielastischen Elemente in Aussparungen angeordnet sind, die einerseits in der Mantelfläche des Außenteils und andererseits in der Innenfläche des ringförmigen Körpers ausgebildet sind. Diese Ausgestaltung des Schwingungstilgers lässt sich in fertigungstechnischer Hinsicht günstig realisieren und ermöglicht eine einfache Einstellung des Schwingungstilger in Bezug auf eine zu dämpfende bzw. zu tilgende Frequenz.

Nachfolgend wird die Erfindung anhand einer mehrere Ausführungsbeispiele darstellenden Zeichnung näher erläutert. Es zeigen schematisch:
- Fig. 1: eine erfindungsgemäße Kupplung in perspektivischer Ansicht;
- Fig. 2: die Kupplung der Fig. 1 in einer Schnittansicht, wobei die Schnittebene senkrecht zur Drehachse der Kupplung und beabstandet zu deren Anschlussflansch verläuft;
- Fig. 3: die Kupplung der Fig. 1 in einer Explosionsdarstellung;
- Fig. 4: einen Abschnitt einer erfindungsgemäßen Kupplung mit radial voneinander beabstandeten Puffern, in Schnittdarstellung;
- Fig. 5: einen Abschnitt einer weiteren erfindungsgemäßen Kupplung mit radial voneinander beabstandeten Puffern, in Schnittdarstellung;
- Fig. 6: eine erfindungsgemäße Kupplung mit einem Schwingungstilger, in perspektivischer Ansicht; und
- Fig. 7: die Kupplung der Fig. 6 in einer Schnittansicht, wobei die Schnittebene senkrecht zur Drehachse der Kupplung und beabstandet zu deren Anschlussflansch verläuft.

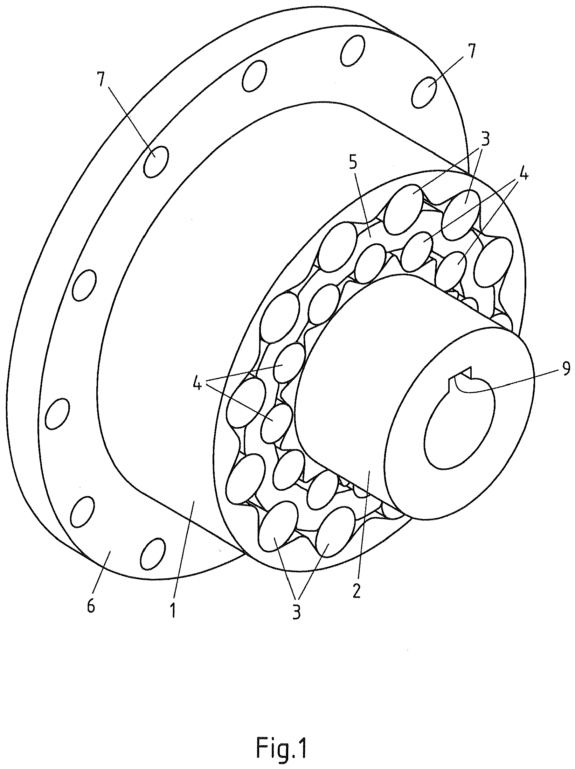

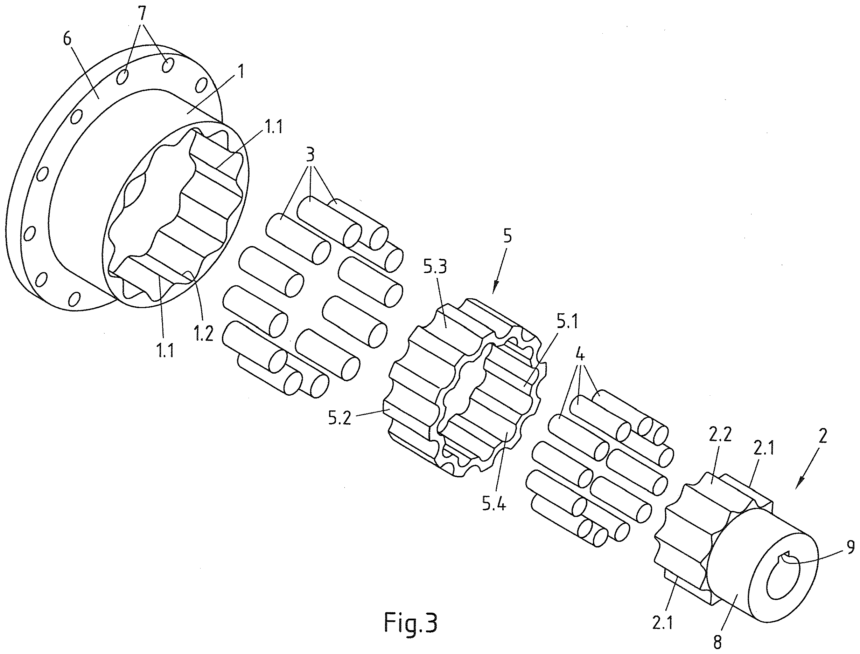

Die in den Figuren 1 bis 3 dargestellte elastische Kupplung ist beispielsweise für den Einsatz bei Getriebeabtriebswellen vorgesehen. Sie ist aus einem metallischen Außenteil 1, einem metallischen Innenteil 2, einer Vielzahl von elastischen Puffern 3, 4 und einem ringförmigen Zwischenteil 5 aufgebaut. Das Außenteil 1 ist mit einem Flansch 6 versehen, der eine Vielzahl von Bohrungen 7 zur Befestigung von Schrauben aufweist. Das Innenteil 2 weist eine Nabe 8 auf, die beispielsweise eine Nut 9 zur Aufnahme einer mit einer anzutreibenden Welle verbundenen Einlegefeder aufweist.

Die Verbindung des Außenteils 1 und des Innenteils 2 mit den zu koppelnden Wellen kann jedoch auch in anderer Weise ausgeführt sein, insbesondere auch mittels einer kraftschlüssigen Verbindung.

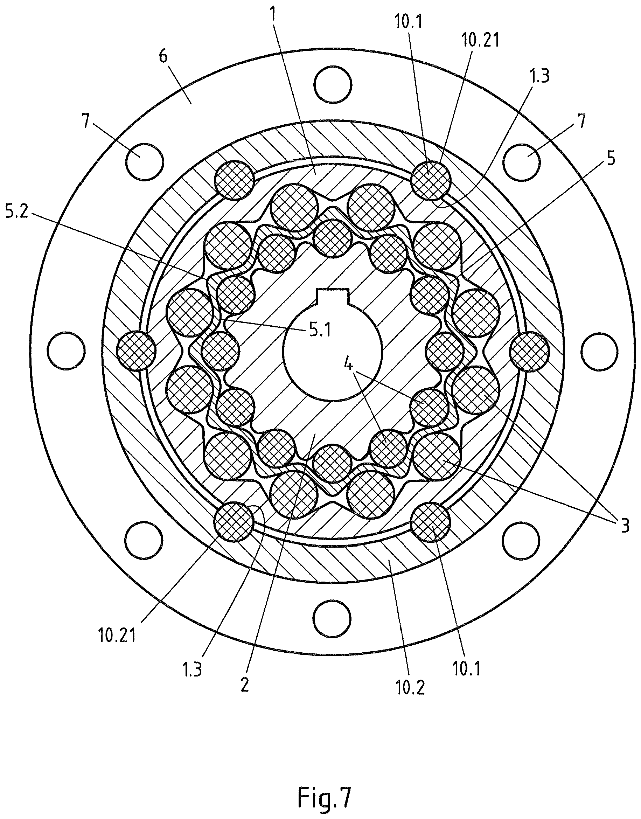

Die elastischen Puffer 3, 4 sind in zwei radial voneinander beabstandeten Gruppen (Reihen) angeordnet. Zwischen den Puffergruppen ist das ringförmige Zwischenteil 5 angeordnet, das aus Kunststoff oder Metall, vorzugsweise aus Leichtmetall hergestellt ist. Das ringförmige Zwischenteil 5 ist sternförmig ausgebildet (vgl. auch Fig. 7).

Das Außenteil 1 weist radial nach innen vorstehende Erhebungen 1.1 auf, die Pufferkontaktflächen oder Formschlussflächen definieren. Ebenso weisen das Innenteil 2 und das ringförmige Zwischenteil 5 radial nach innen bzw. nach außen vorstehende Erhebungen 2.1, 5.1, 5.2 auf, die Pufferkontaktflächen oder Formschlussflächen definieren. Die Erhebungen 1.1, 2.1, 5.1, 5.2 des Außenteils, des Zwischenteils und des Innenteils begrenzen muldenförmige Ausnehmungen 1.2, 2.2, 5.3, 5.4, die der formschlüssigen Aufnahme der Puffer 3, 4 dienen. Das ringförmige Zwischenteil 5 ist relativ zu dem Außenteil 1 und dem Innenteil 2 gegen die Kraft der elastisch komprimierbaren Puffer 3, 4 drehbar. Es ist also weder mit dem Außenteil 1 noch mit dem Innenteil 2 drehstarr verbunden.

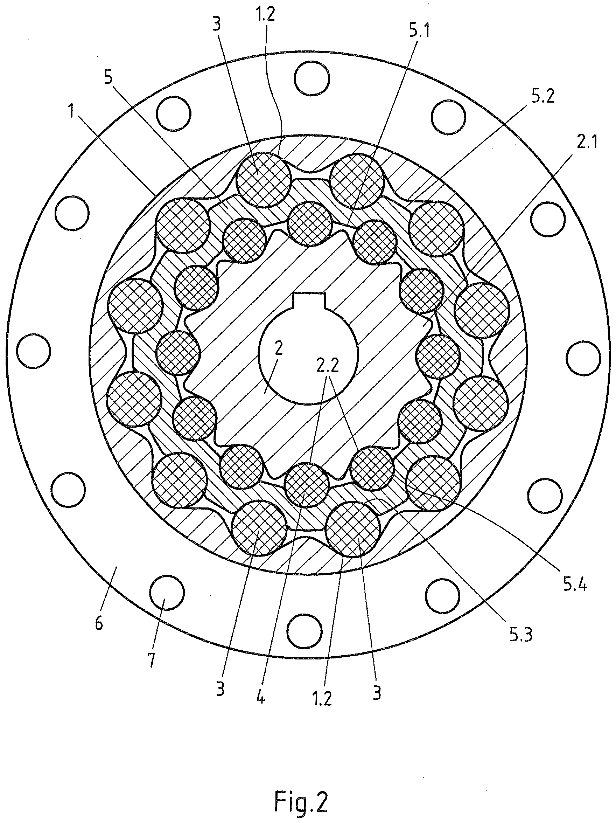

Die muldenförmigen Ausnehmungen 1.2, 2.2, 5.3, 5.4 und dementsprechend die darin aufgenommenen Puffer 3, 4 sind beabstandet voneinander und im Wesentlichen gleichmäßig über den Umfang des Außenteils 1 bzw. des Innenteils 2 verteilt angeordnet. In Fig. 2 ist gut zu erkennen, dass die Puffer 3 der einen Gruppe (Reihe) relativ zu den Puffern 4 der anderen Gruppe (Reihe) in Umfangsrichtung versetzt angeordnet sind. Vorzugsweise sind die Puffer 3 der einen Gruppe im Wesentlichen mittig zwischen den Puffern 4 der anderen Gruppe angeordnet (vgl. Fig. 2).

In dem in den Figuren 1 bis 3 dargestellten Ausführungsbeispiel unterscheiden sich die Puffer 4 der inneren Gruppe von denjenigen (3) der äußeren Gruppe in ihrer Größe. Die hier im Wesentlichen zylindrisch ausgebildeten Puffer 4 der inneren Gruppe haben einen deutlich kleineren Durchmesser als die im Wesentlichen zylindrisch ausgebildeten Puffer 3 der äußeren Gruppe. Darüber hinaus unterscheiden sich die Puffer 4 der inneren Gruppe von denjenigen (3) der äußeren Gruppe vorzugsweise auch hinsichtlich ihres Materials bzw. ihrer Härte. Die Puffer 4 der inneren Gruppe sind vorzugsweise deutlich härter als die Puffer 3 der äußeren Gruppe. Beispielsweise besitzen die Puffer 4 der inneren Gruppe jeweils eine Härte im Bereich von 85 bis 98 Shore-A, während die Puffer 3 der äußeren Gruppe jeweils eine Härte im Bereich von 50 bis 80 Shore-A besitzen können. Zudem können sich die Puffer 4 der inneren Gruppe von den Puffern 3 der äußeren Gruppe auch hinsichtlich ihrer Länge unterscheiden. Beispielsweise können die Puffer 4 jeweils länger oder kürzer sein als die Puffer 3.

Des Weiteren ist in Fig. 2 zu erkennen, dass die innere Puffergruppe und die äußere Puffergruppe die gleiche Anzahl an Puffern 3 bzw. 4 aufweisen. In dem dargestellten Ausführungsbeispiel umfassen beide Puffergruppen jeweils zwölf elastische Puffer 3 bzw. 4. Die Anzahl der Puffer der jeweiligen Gruppe (Reihe) kann jedoch auch größer oder kleiner als zwölf sein.

Zur axialen Sicherung der Puffer 3, 4 und des ringförmigen Zwischenteils 5 kann in der Mantelfläche der Nabe 8 des Innenteils 2 eine Ringnut (nicht gezeigt) zur Festlegung eines Sicherungsringes, beispielsweise eines Seegeringes ausgebildet sein. Die Ringnut bzw. der darin einsetzbare Sicherungsring (nicht gezeigt) sind von den radial vorstehenden Erhebungen 2.1 des Innenteils 2 soweit beabstandet, dass zwischen dem in der Ringnut festgelegten Sicherungsring und den zahnartigen Erhebungen 2.1 eine ringförmige Ausrichtscheibe (nicht gezeigt) mit axialem Spiel angeordnet werden kann. Die ringförmige Ausrichtscheibe erstreckt radial in etwa von der Mantelfläche der Nabe 8 bis auf Höhe der radial nach innen vorstehenden Erhebungen 1.1 des Außenteils 1.

Die Puffer 3, 4 der Kupplung können ohne Verschieben der gekuppelten Aggregate ausgewechselt werden.

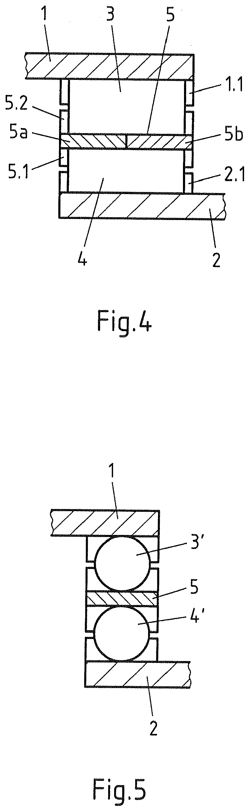

Um die Montage der Puffer 3, 4 zu vereinfachen, kann das ringförmige Zwischenteil 5 mehrteilig ausgeführt sein. In dem in Fig. 4 skizzierten Ausführungsbeispiel ist das ringförmige Zwischenteil 5 zweiteilig ausgeführt.

Optional können die beiden Teile 5a, 5b des Zwischenteils 5 lösbar miteinander verbunden werden. Die lösbare Verbindung der beiden Teile 5a, 5b ist beispielsweise durch darin axial verlaufende, miteinander fluchtende Bohrungen (nicht gezeigt) verwirklicht, die Befestigungsschrauben aufnehmen.

Anstelle von zylindrischen oder tonnenförmigen Puffern 3, 4 kann die erfindungsgemäße Kupplung auch zur Aufnahme anders geformter Puffer, beispielsweise kugelförmiger Puffer 3', 4' ausgebildet sein (vgl. Fig. 5).

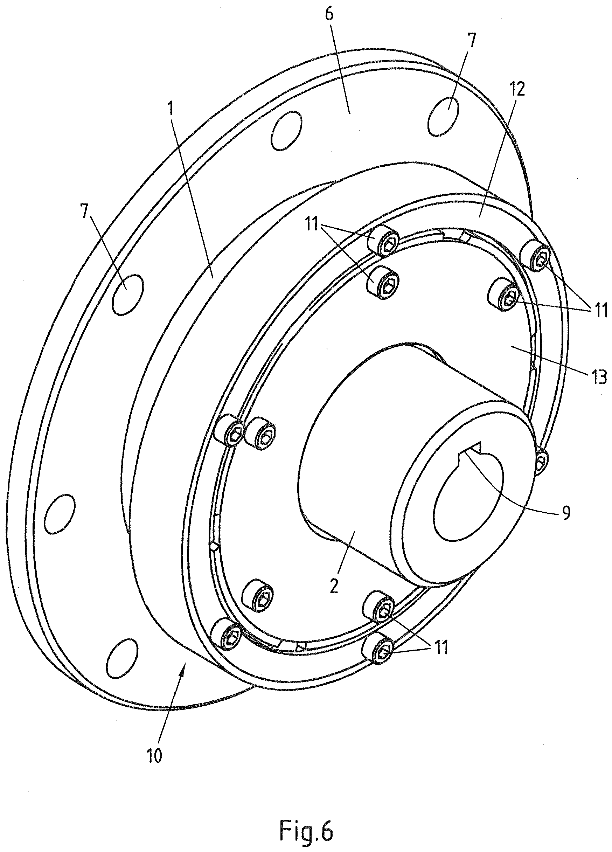

In den Figuren 6 und 7 ist eine erfindungsgemäße Kupplung mit einem Schwingungstilger 10 dargestellt. Die elastische Kupplung der Figuren 6 und 7 entspricht im Wesentlichen der in den Figuren 1 bis 3 dargestellten Kupplung, so dass zur Vermeidung von Wiederholungen insoweit auf die obige Beschreibung der Kupplung verwiesen wird. Die erfindungsgemäße Kupplung stellt ein dynamisches Schwingsystem dar, bei dem es möglicherweise zu Resonanzen kommen kann. Der Schwingungstilger 10 dient der Dämpfung bzw. Tilgung solcher Resonanzen bzw. entsprechender Resonanzfrequenzen. Hierzu weist der Schwingungstilger 10 gummielastische Elemente 10.1 als Federn und einen ringförmigen Körper 10.2 als Masse auf. Der Schwingungstilger 10 stellt somit ein Feder-Masse-System dar, das eine zu einer Resonanzschwingung gegenläufige Schwingung erzeugt. Die gummielastischen Elemente 10.1 sind in Aussparungen 1.3, 10.21 angeordnet, die einerseits in der Mantelfläche des Außenteils 1 der Kupplung und andererseits in der Innenfläche des ringförmigen Körpers 10.2 des Schwingungstilgers ausgebildet sind. Der ringförmige Körper 10.2 umgibt dabei die Mantelfläche des Außenteils 1 mit radialem Abstand. Die Aussparungen 1.3 bzw. gummielastischen Elemente 10.1 sind vorzugsweise gleichmäßig verteilt über den Umfang des Außenteils 1 angeordnet. Vorzugsweise liegen die Aussparungen 1.3 einigen der radial nach innen vorstehenden Erhebungen 1.1 des Außenteils 1 gegenüber. Die gummielastischen Elemente 10.1 sind rotationssymmetrisch, vorzugsweise zylindrisch ausgebildet. Die muldenförmigen Aussparungen 1.3 des Außenteils 1 beginnen oder münden an der dem Flansch 6 abgewandten Stirnseite des Außenteils und enden mit Abstand vor dem Flansch 6. In entsprechender Weise beginnen oder münden die Aussparungen 10.21 des ringförmigen Körpers 10.2 an der dem Flansch 6 abgewandten Stirnseite des ringförmigen Körpers 10.2 und enden mit Abstand vor der gegenüberliegenden Stirnseite des ringförmigen Körpers 10.2. In der dem Flansch 6 abgewandten Stirnseite des Außenteils 1 sowie in der dem Flansch 6 abgewandten Stirnseite des ringförmigen Körpers 10.2 sind Gewindebohrungen zur Aufnahme von Schrauben 11 zur Befestigung von Sicherungsringen 12, 13 vorgesehen. Die Sicherungsringe 12, 13 sind koaxial angeordnet und zueinander radial beabstandet ausgebildet. Der innere Sicherungsring 13 dient der axialen Sicherung der elastischen Puffer 3, 4, des ringförmigen Zwischenteils 5 und der gummielastischen Elemente 10.1, während der äußere Sicherungsring 12 der axialen Sicherung der gummielastischen Elemente 10.1 sowie des ringförmigen Körpers 10.2 des Schwingungstilgers 10 dient.

Durch einen Austausch der gummielastischen Elemente 10.1 gegen derartige Elemente mit anderer Shore-Härte kann die Torsionsfedersteifigkeit des Schwingungstilgers 10 auf einfache Weise auf die zu dämpfende oder zu tilgende Frequenz eingestellt werden. Alternativ oder zusätzlich kann hierzu auch der ringförmige Körper 10.2 gegen einen ähnlichen Körper mit größerer oder kleinerer Masse ausgetauscht werden.

Die Ausführung der Erfindung ist nicht auf die vorstehend beschriebenen Ausführungsbeispiele beschränkt. Vielmehr beinhalten die beigefügten Ansprüche zahlreiche weitere Ausführungen, die auch bei einer von den dargestellten Ausführungsbeispielen abweichenden Ausgestaltung von der Erfindung Gebrauch machen. So kann die erfindungsgemäße Kupplung beispielsweise auch mehr als zwei radial beabstandete Puffergruppen aufweisen.

## Patentansprüche

1. Elastische Kupplung, insbesondere elastische Wellenkupplung, mit einem metallischen Außenteil (1), einem metallischen Innenteil (2) und elastischen Puffern (3, 4; 3', 4'), die zwischen dem Außenteil und dem Innenteil, beabstandet voneinander angeordnet sind, wobei das Außenteil (1) radial nach innen vorstehende, Pufferkontaktflächen definierende Erhebungen (1.1) aufweist und das Innenteil (2) radial nach außen vorstehende, Pufferkontaktflächen definierende Erhebungen (2.1) aufweist, und wobei die elastischen Puffer (3, 4; 3', 4') in mindestens zwei radial voneinander beabstandeten Gruppen angeordnet sind, **dadurch gekennzeichnet, dass** zwischen den benachbarten Puffergruppen mindestens ein separat von den elastischen Puffern (3, 4; 3', 4') gefertigtes, ringförmiges Zwischenteil (5) angeordnet ist, das über die elastischen Puffer (3,4; 3', 4') sowohl mit dem Außenteil (1) als auch mit dem Innenteil (2) drehelastisch verbunden ist, wobei das ringförmige Zwischenteil (5) radial nach innen vorstehende, Pufferkontaktflächen definierende Erhebungen (5.1) sowie radial nach außen vorstehende, Pufferkontaktflächen definierende Erhebungen (5.2) aufweist.

2. Kupplung nach Anspruch 1, **dadurch gekennzeichnet, dass** sich die Gruppen der elastischen Puffer (3, 4; 3', 4') voneinander hinsichtlich des Materials, der Größe und/oder der Form der elastischen Puffer unterscheiden.

3. Kupplung nach Anspruch 1 oder 2, **dadurch gekennzeichnet, dass** die elastischen Puffer (4; 4') einer inneren Gruppe oder der inneren Gruppe härter sind und/oder einen kleineren Durchmesser aufweisen als die elastischen Puffer (3; 3') einer äußeren Gruppe oder der äußeren Gruppe.

4. Kupplung nach einem der Ansprüche 1 bis 3, **dadurch gekennzeichnet, dass** das ringförmige Zwischenteil (5) aus Leichtmetall oder Kunststoff hergestellt ist.

5. Kupplung nach einem der Ansprüche 1 bis 4, **dadurch gekennzeichnet, dass** das ringförmige Zwischenteil (5) aus mindestens zwei axial trennbaren Teilen (5a, 5b) aufgebaut ist.

6. Kupplung nach einem der Ansprüche 1 bis 5, **dadurch gekennzeichnet, dass** die elastischen Puffer (3, 4) zumindest in einer der Gruppen im Wesentlichen rotationssymmetrisch ausgebildet sind.

7. Kupplung nach einem der Ansprüche 1 bis 6, **dadurch gekennzeichnet, dass** die elastischen Puffer (3', 4') zumindest einer der Gruppen im Wesentlichen kugelförmig ausgebildet sind.

8. Kupplung nach einem der Ansprüche 1 bis 7, **dadurch gekennzeichnet, dass** die elastischen Puffer (3) einer der Gruppen relativ zu den elastischen Puffern (4) der dazu benachbarten, radial beabstandeten Gruppe in Umfangsrichtung versetzt angeordnet sind.

9. Kupplung nach einem der Ansprüche 1 bis 8, **gekennzeichnet durch** einen Schwingungstilger (10), dessen Torsionsfedersteifigkeit auf eine zu dämpfende oder zu tilgende Frequenz einstellbar ist.

10. Kupplung nach Anspruch 9, **dadurch gekennzeichnet, dass** der Schwingungstilger (10) gummielastische Elemente (10.1) und einen ringförmigen Körper (10.2) aufweist, wobei die gummielastischen Elemente (10.1) in Aussparungen (1.3, 10.21) angeordnet sind, die einerseits in der Mantelfläche des Außenteils (1) und andererseits in der Innenfläche des ringförmigen Körpers (10.2) ausgebildet sind.

## Claims

1. Elastic coupling, in particular elastic shaft coupling, comprising a metallic outer part (1), a metallic inner part (2) and elastic buffers (3, 4; 3', 4') arranged so as to be spaced apart from each other between the outer part and the inner part, the outer part (1) comprising radially inwardly projecting elevations (1.1) which define buffer contact surfaces and the inner part (2) comprising radially outwardly projecting elevations (2.1) which define buffer contact surfaces, and the elastic buffers (3,4; 3' 4') are arranged in at least two groups which are radially spaced apart form each other, **characterised in that** at least one annular intermediate part (5) separately produced from the elastic buffers (3, 4; 3', 4') being arranged between the adjacent buffer groups and being connected torsionally resiliently both to the outer part (1) and to the inner part (2) via the elastic buffers (3, 4; 3', 4'), wherein the annular intermediate part (5) comprises radially inwardly projecting elevations (5.1) which define buffer contact surfaces and radially outwardly projecting elevations (5.2) which define buffer contact surfaces.

2. Coupling according to claim 1, **characterised in that** the groups of elastic buffers (3,4; 3', 4') differ from one another in the material, size and/or shape of the elastic buffers.

3. Coupling according to either claim 1 or claim 2, **characterised in that** the elastic buffers (4; 4') of an inner group or the inner group are harder and/or have a smaller diameter than the elastic buffers (3; 3') of an outer group or the outer group.

4. Coupling according to any of claims 1 to 3, **characterised in that** the annular intermediate part (5) is produced from light metal or plastics material.

5. Coupling according to any of claims 1 to 4, **characterised in that** the annular intermediate part (5) is constructed from at least two axially separable parts (5a, 5b).

6. Coupling according to any of claims 1 to 5, **characterised in that** the elastic buffers (3, 4) of at least one of the groups are substantially rotationally symmetrical.

7. Coupling according to any of claims 1 to 6, **characterised in that** the elastic buffers (3', 4') of at least one of the groups are substantially spherical.

8. Coupling according to any of claims 1 to 6, **characterised in that** the elastic buffers (3) of one of the groups are arranged offset in the circumferential direction relative to the elastic buffers (4) of the adjacent, radially spaced group.

9. Coupling according to any of claims 1 to 8, **characterised by** a mass damper (10), the torsional spring constant of which can be adjusted to a frequency to be damped or cancelled out.

10. Coupling according to claim 9, **characterised in that** the mass damper (10) comprises rubber-resilient elements (10.1) and an annular body (10.2), the rubber-resilient elements (10.1) being arranged in clearances (1.3,10.21) which are formed both in the outer surface of the outer part (1) and in the inner surface of the annular body (10.2).

## Revendications

1. Accouplement élastique, en particulier accouplement d'arbre élastique, avec une pièce extérieure, métallique (1), une pièce intérieure, métallique (2) et des tampons élastiques (3, 4 ; 3', 4'), qui sont disposés, à distance les uns des autres, entre la pièce extérieure et la pièce intérieure, sachant que la pièce extérieure (1) est dotée d'élévations (1.1), qui, faisant saillie radialement vers l'intérieur, définissent des surfaces de contact pour les tampons, et que la pièce intérieure (2) est dotée d'élévations (2.1), qui, faisant saillie radialement vers l'extérieur, définissent des surfaces de contact pour les tampons, et sachant que les tampons élastiques (3, 4 ; 3', 4') sont disposés en au moins deux groupes, qui sont distancés radialement l'un de l'autre, **caractérisé en ce que**, entre les groupes de tampons voisins, est disposé au moins une pièce intercalaire (5) en forme de bague, qui, fabriquée séparément par rapport aux tampons élastiques (3, 4 ; 3', 4'), est reliée, élastique en rotation, par l'intermédiaire des tampons élastiques (3,4 ; 3', 4'), aussi bien à la pièce extérieure (1) qu'à la pièce intérieure (2), sachant que la pièce intercalaire (5) en forme de bague est dotée d'élévations (5.1), qui, faisant saillie radialement vers l'intérieur, définissent des surfaces de contact pour les tampons, ainsi que d'élévations (5.2), qui, faisant saillie radialement vers l'extérieur, définissent des surfaces de contact pour les tampons.

2. Accouplement selon la revendication 1, **caractérisé en ce que** les groupes de tampons élastiques (3,4; 3', 4') diffèrent les uns des autres en ce qui concerne le matériau, la grosseur et / ou la forme des tampons élastiques.

3. Accouplement selon revendication 1 ou 2, **caractérisé en ce que** les tampons élastiques (4; 4') d'un groupe intérieur ou du groupe intérieur sont plus durs et / ou dotés d'un diamètre plus petit que les tampons élastiques (3; 3') d'un groupe extérieur ou du groupe extérieur.

4. Accouplement selon l'une des revendications 1 à 3, **caractérisé en ce que** la pièce intercalaire (5) en forme de bague est fabriquée en métal léger ou en matière synthétique.

5. Accouplement selon l'une des revendications 1 à 4, **caractérisé en ce que** la pièce intercalaire (5) en forme de bague est composée d'au moins deux parties (5a, 5b) pouvant être séparées l'une de l'autre axialement.

6. Accouplement selon l'une des revendications 1 à 5, **caractérisé en ce que** les tampons élastiques (3, 4) d'au moins l'un des groupes sont essentiellement symétriques en rotation.

7. Accouplement selon l'une des revendications 1 à 6, **caractérisé en ce que** les tampons élastiques (3', 4') d'au moins l'un des groupes sont essentiellement réalisés en forme de boules.

8. Accouplement selon l'une des revendications 1 à 7, **caractérisé en ce que** les tampons élastiques (3) de l'un des groupes sont disposés en étant décalés dans la direction périphérique par rapport aux tampons élastiques (4) du groupe voisin, radialement distancé.

9. Accouplement selon l'une des revendications 1 à 8, **caractérisé par** un amortisseur de vibrations (10), dont la rigidité en torsion élastique peut être réglée à une fréquence devant être amortie ou supprimée.

10. Accouplement selon la revendication 9, **caractérisé en ce que** l'amortisseur de vibrations (10) est doté d'éléments présentant l'élasticité du caoutchouc (10.1) et d'un corps en forme de bague (10.2), sachant que les éléments présentant l'élasticité du caoutchouc (10.1) sont disposés dans des évidements (1.3,10.21), qui sont formés, d'une part, dans la face latérale de la pièce extérieure (1) et, d'autre part, dans la face intérieure du corps en forme de bague (10.2).
